# FASCICULE DE BREVET EUROPEEN

(11) **EP 3 164 237 B1**
(45) Date de publication et mention de la délivrance du brevet: **02.10.2019**
(21) Numéro de dépôt: 15736568.5
(22) Date de dépôt: 29.06.2015
(51) Int. Cl.: B22D 19/00, B22D 19/04, F01D 5/28

(54) **PROCÉDÉ DE FABRICATION D'UNE AUBE BI-COMPOSANT POUR MOTEUR À TURBINE À GAZ ET AUBE OBTENUE PAR UN TEL PROCÉDÉ**
VERFAHREN ZUR HERSTELLUNG EINER ZWEIKOMPONENTIGEN SCHAUFEL FÜR EINEN GASTURBINENMOTOR UND DURCH DIESES VERFAHREN ERHALTENE SCHAUFEL
METHOD FOR MANUFACTURING A TWO-COMPONENT BLADE FOR A GAS TURBINE ENGINE AND BLADE OBTAINED BY SUCH A METHOD

(30) Priorité: 04.07.2014 FR 1456426
(43) Date de publication de la demande: 10.05.2017
(73) Titulaire: SAFRAN AIRCRAFT ENGINES, 75015 Paris (FR)
(72) Inventeur: CASTEILLA, François, F-77550 Moissy-cramayel Cedex (FR); DIGARD BROU DE CUISSART, Sébastien, F-77550 Moissy-cramayel Cedex (FR); FARGEAS, Serge, F-77550 Moissy-cramayel Cedex (FR); HERB, Vincent, F-77550 Moissy-cramayel Cedex (FR); LANGLOIS, Chantal, Sylvette, F-77550 Moissy-cramayel Cedex (FR)
(74) Mandataire: Healy, Erwan
(86) Numéro de dépôt international: PCT/FR2015/051747
(87) Numéro de publication internationale: WO 2016/001544

(56) Documents cités:
- EP-A1- 0 118 020
- EP-A1- 2 468 434
- DE-A1- 2 834 843
- FR-A1- 2 463 849
- GB-A- 2 062 530
- US-A- 3 844 728
- US-A- 4 247 259

## Description

### Arrière-plan de l'invention

La présente invention se rapporte au domaine général de la fabrication des aubes pour moteur à turbine à gaz.

Les aubes d'un moteur à turbine à gaz, et en particulier les aubes de la turbine haute-pression d'un turboréacteur, sont soumises aux gaz chauds issus de la chambre de combustion.

Pour améliorer le rendement du moteur, il est connu d'augmenter la température de ces gaz d'éjection de la chambre de combustion jusqu'à des températures pouvant être bien supérieures aux points de fusion des meilleurs alliages métalliques dans lesquelles les aubes sont généralement fabriquées.

Aussi, pour permettre aux aubes en alliage métallique de tenir à très hautes températures, il est connu de les recouvrir d'un revêtement en céramique formant barrière thermique et de pratiquer des circuits internes de refroidissement.

Cependant, de tels revêtements et de tels circuits internes de refroidissement sont de plus en plus complexes à réaliser et ne permettent pas toujours aux aubes de tenir aux très hautes températures des gaz d'éjection de la chambre de combustion. Notamment, la température de ces gaz d'éjection est amenée à augmenter au-delà des températures actuelles des gaz d'éjection de la chambre de combustion, ce qui complexifie davantage la réalisation des revêtements formant barrière thermique et des circuits internes de refroidissement. Il est connu du document GB 2 062 530 un procédé de fabrication d'une aube.

### Objet et résumé de l'invention

Il existe donc un besoin de pouvoir disposer d'un procédé de fabrication d'une aube lui permettant de tenir à de très hautes températures sans présenter les inconvénients précités.

Conformément à l'invention, ce but est atteint grâce à un procédé de fabrication d'une aube bi-composant pour moteur à turbine à gaz, comprenant successivement :
l'obtention d'un profil d'aube en matériau céramique comprenant un trou traversant le profil d'aube de part en part dans le sens de sa longueur pour former un canal longitudinal débouchant à une première extrémité longitudinale du profil d'aube dans une cavité supérieure ;
le positionnement et le maintien du profil d'aube dans un moule de sorte à ménager une cavité inférieure communiquant avec le canal du profil d'aube au niveau d'une seconde extrémité longitudinale du profil d'aube ;
la coulée de métal en fusion dans le profil d'aube de sorte à remplir les cavités supérieure et inférieure et le canal qui les relie ; et
le refroidissement du métal de sorte à ce que le retrait du métal refroidi dans les cavités supérieure et inférieure provoque une mise en précontrainte en compression de la céramique du profil d'aube.

Le procédé de fabrication selon l'invention est remarquable en ce que, lors du refroidissement du métal coulé dans les cavités du profil d'aube, celui-ci, par son retrait naturel, va exercer un effort en compression sur la céramique constituant ce profil d'aube (dans le sens de la longueur du profil d'aube). L'aube obtenue par ce procédé de fabrication présente donc une précontrainte en compression de la céramique. En fonctionnement, l'effort subi par l'aube est un effort centrifuge (dans le sens de la longueur du profil d'aube) qui se traduit par un effort de traction sur les composants de l'aube. Avec sa précontrainte en compression et grâce à l'écart de dilatation entre la céramique et le métal qui la constituent, l'aube pourra ainsi aisément supporter les efforts de traction qu'elle subit. Notamment, pour annuler cette précontrainte en compression, il faudrait atteindre des températures pour lesquelles le métal utilisé n'a plus de résistance mécanique, de telles températures n'étant en pratique jamais atteintes dans un moteur à turbine à gaz.

De plus, faire travailler en compression la céramique constituant le profil d'aube de l'aube obtenue par le procédé de fabrication selon l'invention permet de disposer d'un vaste choix de céramiques, notamment de céramiques moins coûteuses que celles usuellement utilisées. Le poids de l'aube ainsi obtenue est également moindre que pour des aubes connues de l'art antérieur. Enfin, une telle aube est facilement réparable, en effectuant un simple remplacement de la céramique.

De préférence, le matériau céramique utilisé pour former le profil d'aube est de l'alumine et le métal utilisé pour la coulée est un alliage métallique à base de nickel.

De préférence également, le procédé comprend en outre la réalisation d'un circuit interne de refroidissement de l'aube. Dans ce cas, la réalisation d'un circuit interne de refroidissement de l'aube peut comprendre, préalablement à l'étape de coulée de métal en fusion, la disposition dans le canal d'au moins un noyau allongé traversant de part en part le profil d'aube dans le sens de sa longueur, et l'extraction dudit noyau après l'étape de coulée de métal en fusion pour former un passage d'air traversant l'aube de part en part. Le noyau pour la réalisation du circuit interne de refroidissement de l'aube peut être réalisé en silice.

La réalisation d'un tel circuit de refroidissement est aisée, notamment par rapport aux circuits internes de refroidissement des aubes connues de l'art antérieur. En outre, ce circuit de refroidissement présente un faible impact sur les performances du moteur.

L'invention a également pour objet une aube pour moteur à turbine à gaz qui est obtenue par le procédé tel que défini précédemment.

L'invention a encore pour objet un moteur à turbine à gaz comprenant au moins une telle aube.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique et en perspective d'une aube obtenue par le procédé de fabrication selon l'invention ;
- les figures 2 à 5 sont des vues schématiques montrant différentes étapes du procédé de fabrication de l'aube de la figure 1 ; et
- les figures 6 et 7 sont des vues en coupe longitudinale d'aubes selon des variantes de réalisation de l'invention.

### Description détaillée de l'invention

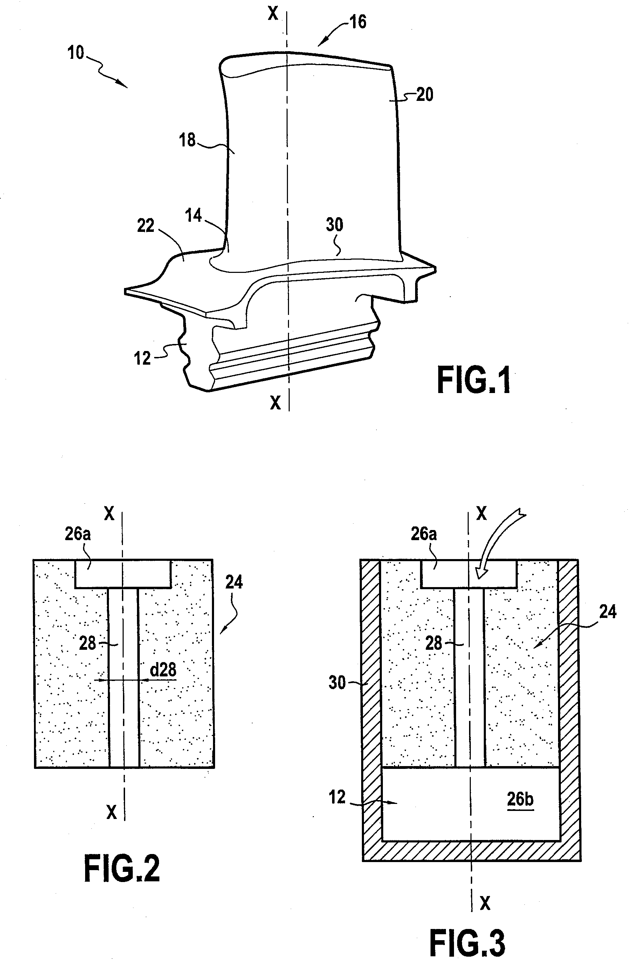

L'invention s'applique à la réalisation de toute aube équipant un moteur à turbine à gaz, et notamment aux aubes de la turbine haute-pression d'un turboréacteur telles que l'aube 10 représentée sur la figure 1.

De façon connue en soi, l'aube 10 présente un axe longitudinal X-X et est destinée à être fixée sur un disque de rotor de la turbine haute-pression du turboréacteur par l'intermédiaire d'un emmanchement 12 généralement en forme de sapin.

L'aube 10 s'étend selon l'axe longitudinal X-X entre un pied 14 et un sommet 16 et comprend un bord d'attaque 18 et un bord de fuite 20. L'emmanchement 12 se raccorde au pied 14 de l'aube au niveau d'une plate-forme 22 définissant une paroi intérieure pour la veine d'écoulement des gaz de combustion qui traversent la turbine haute-pression.

Une telle aube 10 doit résister aux températures très élevées des gaz provenant de la chambre de combustion du turboréacteur située directement en amont de la turbine haute-pression.

Conformément à l'invention, il est prévu un procédé de fabrication d'une telle aube qui permet d'atteindre cet objectif.

A cet effet, le procédé selon l'invention prévoit dans un premier temps la réalisation d'un profil d'aube en matériau céramique. Par profil d'aube, on entend une pièce ayant la forme finale de l'aube.

Ce profil d'aube peut être obtenu selon différentes techniques connues en soi et non décrites en détails ici, par exemple par un procédé mettant en oeuvre l'injection de céramique dans un moule de forme approprié ou par un procédé de fabrication dite « additive » (i.e. utilisant l'impression tridimensionnelle).

Une autre technique connue pouvant être utilisée (adaptée à une fabrication en série de l'aube) est le procédé de fabrication de fonderie à la cire perdue avec un moule carapace et recourant à une élaboration par solidification dirigée. On pourra se référer au document EP 2,092,999 dans lequel un tel procédé est décrit.

Lorsque le procédé utilisé pour l'obtention du profil d'aube met en oeuvre l'injection de céramique dans un moule de forme approprié, le profil d'aube est ensuite percé (par exemple par un outil mécanique) pour réaliser un trou traversant le profil d'aube de part en part dans le sens de sa longueur, c'est-à-dire selon l'axe longitudinal X-X de l'aube à fabriquer.

Ce trou traversant est réalisé de sorte à former une cavité supérieure 26a à une extrémité longitudinale supérieure du profil d'aube, cette cavité supérieure débouchant dans un canal 28. Le canal 28 présente un diamètre d28 de plus petite dimension que la cavité supérieure 26a dans laquelle il débouche.

Comme représenté sur la figure 3, le profil d'aube 24 est positionné et maintenu en place dans un moule 30 de sorte à ménager une cavité inférieure 26b communiquant avec le canal 28 du profil d'aube au niveau de l'extrémité longitudinale inférieure du profil d'aube. Comme pour la cavité supérieure, cette cavité inférieure 26b présente une section droite de plus grande dimension que le diamètre d28 du canal 28.

Bien entendu, lorsque le procédé utilisé pour l'obtention du profil d'aube met en oeuvre d'autres techniques de fabrication, telles que notamment la fonderie à la cire perdue avec un moule carapace, le canal et les cavités supérieure et inférieure du profil d'aube seront obtenus par d'autres moyens (typiquement par des noyaux).

L'étape suivante du procédé selon l'invention consiste à réaliser une coulée de métal en fusion dans le profil d'aube 24 de sorte à remplir les deux cavités 26a, 26b et le canal 28 qui les relie.

Cette opération de coulée est typiquement réalisée dans un four de coulée (non représenté sur les figures) à l'intérieur duquel le moule 30 est placé. Le métal en fusion Mf vient se déverser dans le moule 30 à travers le profil d'aube 24 depuis la cavité supérieure 26a pour remplir complètement la cavité inférieure 26b, le canal 28 et la cavité supérieure 26a. A titre d'exemple, on pourra choisir comme métal pour la coulée un alliage métallique à base de nickel, tel que l'AM1 typiquement utilisé par la société Snecma pour l'élaboration de certaines de ses aubes de turbine monocristallines.

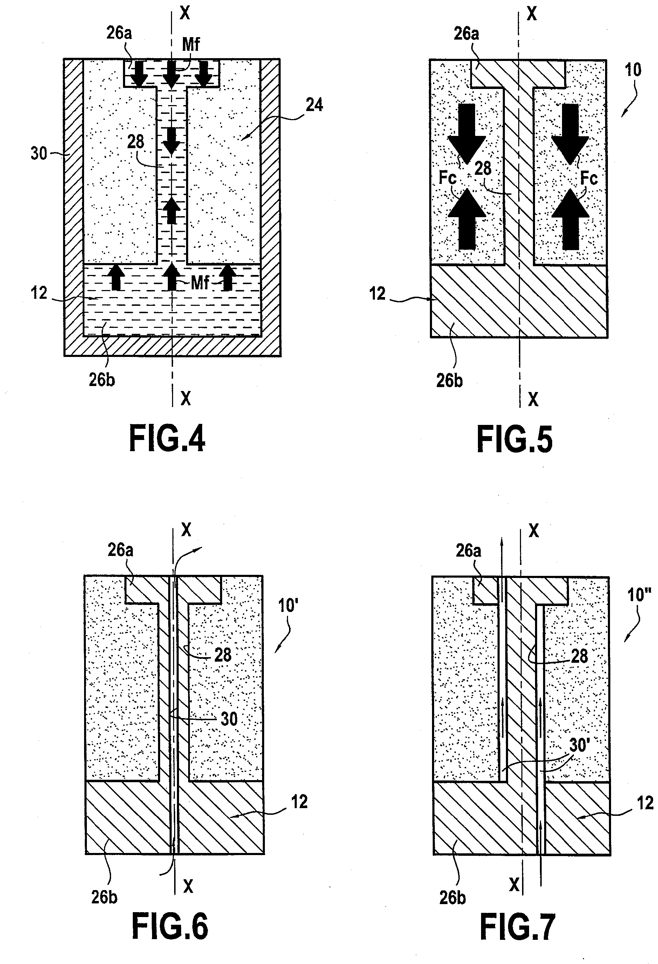

Lorsque la coulée du métal en fusion est finie, le moule 30 est sorti du four de coulée et le profil d'aube 24 est refroidi. Ce refroidissement a pour conséquence naturelle d'engendrer un retrait du métal à l'intérieur des cavités 26a, 26b et du canal 28 qui relie ces dernières (ce retrait est symbolisé par les flèches sur la figure 4).

Ainsi, comme représenté sur la figure 5, on obtient une aube 10 bi-composant avec la cavité supérieure 26a remplie de métal située du côté du sommet 16 de l'aube et la cavité inférieure 26b définissant au moins en partie l'emmanchement 12 de l'aube.

Le retrait du métal refroidi dans les cavités et le canal qui les relie provoque une mise en précontrainte en compression de la céramique du profil d'aube (cette précontrainte en compression est symbolisée par les flèches Fc).

En fonctionnement, l'aube est soumise, d'une part à des températures élevées, et d'autre part à un effort centrifuge (dans le sens de la longueur du profil d'aube, de l'emmanchement vers le sommet), cet effort centrifuge se traduisant par un effort de traction sur le profil d'aube. Avec sa précontrainte en compression, l'aube peut ainsi aisément supporter les efforts de traction qu'elle subit. Notamment, l'écart de dilatation entre la céramique constituant le profil d'aube et le métal coulé dans les cavités et le canal de celui-ci diminue en fonctionnement la précontrainte en compression de la céramique du profil d'aube.

La figure 6 représente une variante de réalisation d'une aube 10' obtenue par le procédé selon l'invention.

Dans cette variante, il est prévu de réaliser un circuit interne de refroidissement de l'aube. A cet effet, préalablement à l'étape de coulée de métal en fusion dans le profil d'aube, un noyau allongé (non représenté), par exemple réalisé en silice décochable, est disposé dans le canal 28 reliant les deux cavités 26a, 26b entre elles. Ce noyau vient ainsi traverser de part en part le profil d'aube dans le sens de sa longueur.

Après l'étape de coulée du métal en fusion, ce noyau est extrait par décochage du profil d'aube de sorte à former un passage d'air 30 traversant l'aube 10' de part en part. Un flux d'air de refroidissement est introduit dans ce passage d'air 30 depuis la base de l'emmanchement 12 de l'aube et est évacué dans la veine de la turbine haute-pression au niveau du sommet 16 de l'aube.

La figure 7 représente une autre variante de réalisation d'une aube 10" obtenue par le procédé selon l'invention.

Dans cette autre variante, l'aube 10" présente également un circuit interne de refroidissement. Lorsque le procédé utilisé pour l'obtention du profil d'aube met en oeuvre l'injection de céramique dans un moule de forme approprié, ce circuit est formé, préalablement à l'étape de coulée de métal en fusion dans le profil d'aube ou lors de la mise en place du profil d'aube dans le moule de coulée, en positionnant un noyau en forme de douille dans le canal 28. Lorsque le procédé utilisé pour l'obtention du profil d'aube met en oeuvre la fonderie à la cire perdue avec un moule carapace, le circuit de refroidissement est formé préalablement à l'étape d'injection de la cire en positionnant, dans le moule d'injection de la cire, un noyau de forme correspondant au circuit interne de refroidissement.

Après l'étape de coulée du métal en fusion, ce noyau en forme de douille est extrait du profil d'aube de sorte à former un passage d'air 30' qui est annulaire dans la partie centrale de l'aube 10". Un flux d'air de refroidissement est introduit dans ce passage d'air 30' depuis la base de l'emmanchement 12 de l'aube et est évacué dans la veine de la turbine haute-pression au niveau du sommet 16 de l'aube.

## Revendications

1. Procédé de fabrication d'une aube (10 ; 10' ; 10") bi-composant pour moteur à turbine à gaz, comprenant successivement :
l'obtention d'un profil d'aube (24) en matériau céramique comprenant un trou traversant le profil d'aube de part en part dans le sens de sa longueur pour former un canal longitudinal (28) débouchant à une première extrémité longitudinale du profil d'aube dans une cavité supérieure (26a) ;
le positionnement et le maintien du profil d'aube dans un moule (30) de sorte à ménager une cavité inférieure (26b) communiquant avec le canal (28) du profil d'aube au niveau d'une seconde extrémité longitudinale du profil d'aube ;
la coulée de métal en fusion (Mf) dans le profil d'aube de sorte à remplir les cavités supérieure et inférieure et le canal qui les relie ; et
le refroidissement du métal de sorte à ce que le retrait du métal refroidi dans les cavités supérieure et inférieure provoque une mise en précontrainte en compression de la céramique du profil d'aube.

2. Procédé selon la revendication 1, dans lequel le matériau céramique utilisé pour former le profil d'aube est de l'alumine et le métal utilisé pour la coulée est un alliage métallique à base de nickel.

3. Procédé selon la revendication 1 ou 2, comprenant en outre la réalisation d'un circuit interne de refroidissement de l'aube.

4. Procédé selon la revendication 3, dans lequel la réalisation d'un circuit interne de refroidissement de l'aube comprend, préalablement à l'étape de coulée de métal en fusion, la disposition dans le canal (28) d'au moins un noyau allongé traversant de part en part le profil d'aube dans le sens de sa longueur, et l'extraction dudit noyau après l'étape de coulée de métal en fusion pour former un passage d'air (30 ; 30') traversant l'aube de part en part.

5. Procédé selon la revendication 4, dans lequel le noyau pour la réalisation du circuit interne de refroidissement de l'aube est réalisé en silice.

6. Aube (10 ; 10' ; 10") pour moteur à turbine à gaz **caractérisée en ce qu'**elle est obtenue par le procédé selon l'une quelconque des revendications 1 à 5.

7. Moteur à turbine à gaz comprenant au moins une aube selon la revendication 6.

## Patentansprüche

1. Verfahren zur Herstellung einer Zweikomponentenschaufel (10; 10'; 10") für ein Gasturbinentriebwerk, nacheinander umfassend:
das Erhalten eines Schaufelprofils (24) aus Keramikmaterial, das ein Loch aufweist, welches das Schaufelprofil in der Richtung seiner Länge vollständig durchquert, um einen Längskanal (28) zu bilden, der an einem ersten Längsende des Schaufelprofils in einen oberen Hohlraum (26a) mündet,
das Positionieren und Halten des Schaufelprofils in einer Form (30), um einen unteren Hohlraum (26b) auszubilden, welcher mit dem Kanal (28) des Schaufelprofils im Bereich eines zweiten Längsendes des Schaufelprofils in Verbindung steht,
das Gießen von Metallschmelze (Mf) in das Schaufelprofil, um die oberen und unteren Hohlräume und den sie verbindenden Kanal zu füllen, und
das Abkühlen des Metalls, so dass das Zusammenziehen des abgekühlten Metalls im oberen und unteren Hohlraum ein Druckvorspannungsbeaufschlagen der Keramik des Schaufelprofils bewirkt.

2. Verfahren nach Anspruch 1, bei dem das zum Ausbilden des Schaufelprofils verwendete Keramikmaterial Aluminiumoxid ist und das für das Gießen verwendete Metall eine Metalllegierung auf Nickelbasis ist.

3. Verfahren nach Anspruch 1 oder 2, ferner umfassend das Herstellen eines innerer Kühlkreislaufs der Schaufel.

4. Verfahren nach Anspruch 3, bei dem die Herstellung eines inneren Kühlkreislaufs der Schaufel vor dem Schritt des Gießens von Metallschmelze die Anordnung von wenigstens einem langgestreckten Kern, welcher das Schaufelprofil in der Richtung seiner Länge vollständig durchquert, sowie das Herausnehmen des Kerns nach dem Schritt des Gießens von Metallschmelze umfasst, um einen die Schaufel vollständig durchquerenden Luftdurchgang (30; 30') zu bilden.

5. Verfahren nach Anspruch 4, bei dem der Kern für die Herstellung des inneren Kühlkreislaufs der Schaufel aus Siliziumdioxid besteht.

6. Schaufel (10; 10; 10") für ein Gasturbinentriebwerk, **dadurch gekennzeichnet, dass** sie durch das Verfahren nach einem der Ansprüche 1 bis 5 erhalten wird.

7. Gasturbinentriebwerk, das wenigstens eine Schaufel nach Anspruch 6 umfasst.

## Claims

1. A method of fabricating a two-component blade (10; 10'; 10") for a gas turbine engine, the method comprising in succession:
obtaining a blade profile (24) made of ceramic material having a hole passing right through the blade profile in its length direction so as to form a longitudinal channel (28) opening out at a first longitudinal end of the blade profile into a top cavity (26a);
positioning and maintaining the blade profile in a mold (30) so as to form a bottom cavity (26b) communicating with the channel (28) of the blade profile at a second longitudinal end of the blade profile;
casting molten metal (Mf) into the blade profile so as to fill the top and bottom cavities and the channel interconnecting them; and
cooling the metal so that the shrinkage of the metal cooled in the top and bottom cavities leads to the ceramic of the blade profile being subjected to compression prestress.

2. A method according to claim 1, wherein the ceramic material used for forming the blade profile is alumina and the metal used for casting is a nickel-based metal alloy.

3. A method according to claim 1 or claim 2, further including making an internal cooling circuit in the blade.

4. A method according to claim 3, wherein an internal cooling circuit is made in the blade by acting, prior to the step of casting molten metal, to place at least one elongate core in the channel (28) extending right through the blade profile in its length direction, and, after the step of casting molten metal, to extract the core in order to form an air passage (30; 30') passing right through the blade.

5. A method according to claim 4, wherein the core for making the internal cooling circuit in the blade is made of silica.

6. A blade (10; 10'; 10") for a gas turbine engine, the blade being **characterized in that** it is obtained by the method according to any one of claims 1 to 5.

7. A gas turbine engine including at least one blade according to claim 6.
